# EUROPEAN PATENT APPLICATION

(11) **EP 4 270 741 A1**
(43) Date of publication of application: **01.11.2023**
(21) Application number: 22170563.5
(22) Date of filing: 28.04.2022
(51) Int. Cl.: H02K 9/19, H02K 1/20, H02K 5/20, H02K 9/26

(54) **ARRANGEMENT, COMPRISING AN ELECTRIC MOTOR**

(71) Applicant: Valeo eAutomotive Germany GmbH, 91056 Erlangen (DE)
(72) Inventor: Lewandowski, Marek, 91056 C/o VSeA, Erlangen (DE)
(74) Representative: Valeo Powertrain Systems

(57) **Abstract**

Arrangement (16), comprising an electric motor (1) with a stator (2) with a lamination stack (3) surrounded by windings (4) for generating a rotating electromagnetic field, a rotor (5) surrounded by the stator (3), a first endcap (7) arranged at one axial side of the electric motor (1), a second endcap (10) arranged at the opposite axial side of the electric motor (1), channels (11, 12) for a cooling fluid which extend in axial direction through the lamination stack (3), pipes (17) for the cooling fluid which form a closed circuit and which are connected to an inlet (18) and an outlet (19) of the electric motor (1), a pump (20) for conveying the cooling fluid, wherein the electric motor (1) is located in the suction path of the pump (20).

## Description

The invention refers to an arrangement, comprising an electric motor with
- a stator with a lamination stack surrounded by windings for generating a rotating electromagnetic field,
- a rotor surrounded by the stator,
- a first endcap arranged at an axial side of the electric motor,
- a second endcap arranged at the opposite axial side of the electric motor,
- channels for a cooling fluid which extend in axial direction through the lamination stack,
- cooling fluid pipes forming a closed circuit which are connected to an inlet and an outlet of the electric motor, and
- a pump for conveying the cooling fluid.

Electric machines of this type are increasingly being used in electrically powered vehicles and hybrid vehicles, predominantly as an electric motor for driving a wheel or an axle of a vehicle.

Such an electric motor is usually mechanically coupled to a gearbox for speed adjustment. In addition, the electric motor is usually electrically coupled to an inverter which generates an alternating voltage for operating the electric motor from a direct voltage supplied by a battery.

In many applications the stator of the electric motor needs additional cooling beyond radiating the heat to the environment. This is commonly accomplished by a cooling fluid, which is brought into thermal contact with either the stator lamination stack and/or the stator winding. Using a liquid cooling incurs the necessity to provide channels for the cooling fluid to run through the stator lamination pack in such a manner that the cooling fluid does not leak. A common solution for liquid cooling is a water jacket, usually a two-piece housing enclosing the motor around the outer diameter, enclosing the channel for the cooling fluid within and preventing the cooling fluid from direct contact with the lamination stack or with the outside world. Any outer housing is a part that increases production costs, takes up space and needs to be adjusted if the motor length is to change, thereby making power scaling more difficult, than if there was no outer housing necessary.

It is therefore an object of the invention to provide an arrangement, comprising an electric motor which does not need an outer housing covering the stator lamination stack.

This object is solved by an arrangement with the features of claim 1.

According to the invention the electric motor with its stator is located in the suction path of the pump. The invention is based on the idea that the pressure of the cooling fluid is permanently below the outside atmospheric pressure, when the electric motor is positioned in the suction path of the pump. In contrast, in conventional arrangements the electric motor is located in the discharge path of the pump, where the pressure of the cooling fluid is higher than the outside atmospheric pressure. The invention avoids the problem of conventional electric motors that cooling fluid may leak through the stator lamination stack due to the increased pressure in the discharge path. As leakage of cooling fluid to the outside is basically impossible, it is not necessary to employ a space consuming water jacket are a similar complicated and expensive housing. Accordingly, the invention provides a simple and effective solution to the problem to provide an electric motor having a stator lamination stack with channels for a cooling fluid, which does not require a conventional outer housing covering the stator lamination stack.

It is preferred that the closed circuit of the cooling fluid of the inventive arrangement comprises a container or an oil sump. The container or oil sump is preferably located at or near the bottom of the arrangement, so that cooling fluid is returned to and collected in it. As the electric motor is positioned in the suction path of the pump, cooling fluid is sucked from the container or oil sump through the electric motor to the pump, whereby the stator lamination stack of the electric motor is cooled. Preferably, the cooling fluid is an oil.

According to a particularly preferred embodiment of the inventive arrangement the lamination stack of the stator is exposed to the outside. The lamination stack consists of a plurality of punched metal sheets stacked next to each other. Due to the low pressure in the suction path of the pump, to which the stator lamination stack belongs, no further measures are necessary to seal the stator lamination stack against the outer atmosphere. The inventive arrangement therefore fulfils the requirements in terms of environmental protection as leaking of the cooling fluid is prevented.

However, as an alternative it can also be envisaged that the outer surface of the stator lamination stack of the electric motor of the inventive arrangement is provided with a coating. A coating may improve the quality of the sealing without taking up substantial space. The coating can be a paint, which is applied on the outer surface of the stator lamination stack after the metal sheets have been stacked. Alternatively, the coating can also be a lacquering or a layer which has been applied by powder coating.

The outer surface of the stator lamination stack may also be provided with a plastic film. Such a coating has the advantage that the plastic film does not increase the diameter of the lamination stack or the electric motor in a relevant manner. Preferably, the plastic film is a shrink wrap film, which ensures a tight fit between the film and the stator lamination stack. All mentioned means to coat or wrap the stator lamination stack provide a sealing against ingress of water, dirt or other unwanted substances from the outside. In addition, it is very easy to scale the power of the electric motor by simply adjusting the length of the stator lamination stack without the need to adapt a housing.

In the inventive arrangement the closed loop for the cooling fluid preferably comprises a filter and/or a heat exchanger. The filter helps to remove abrasion particles from the cooling fluid. The heat exchanger increases the amount of dissipated heat.

The endcaps of the electric motor may comprise circumferentially extending channel links for connecting two axial channels. Preferably, each end cap has several circumferentially extending channel links with ends, which communicate with respective axial channels for the cooling fluid in the stator lamination stack. The combination of the circumferentially extending links in the end caps and the axial channels forms an extended cooling path in which the cooling fluid flows through different axial channels before it leaves the stator lamination stack, whereby the stator is cooled.

The invention is explained by means of a preferred example with reference to the drawings. The drawings are schematic representations and show:
- Fig. 1: a sectional view of an inventive electric motor,
- Fig. 2: an sectional view of the endcap along the line II-II of Fig. 1; and
- Fig. 3: an inventive arrangement.

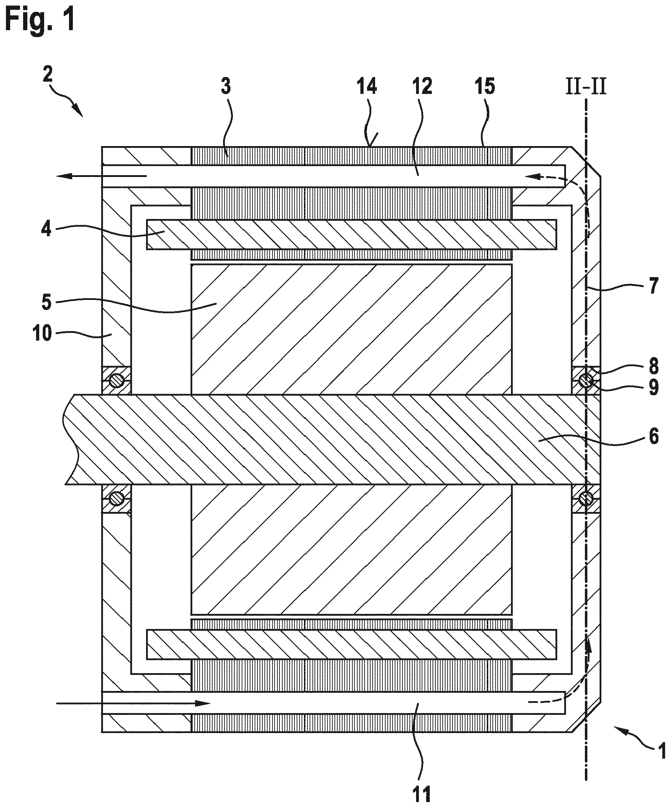

Fig. 1 discloses an electric motor 1 comprising a stator 2 with a lamination stack 3 with windings 4 for generating a rotating electromagnetic field. The windings 4 are protruding in axial direction from both ends of the lamination stack 3. A rotor 5 with a rotor shaft 6 is surrounded by the stator 2.

The electric motor comprises a first endcap 7 arranged at an axial side of the electric motor 1. The endcap 7 covers the interior of the electric motor 1. It comprises a circular hole 8, in which a bearing 9 for the rotor shaft 6 is received. A second endcap 10 is arranged at the opposite axial side of the electric motor 1.

The lamination stack 3 is composed of a plurality of metal sheets stacked next to each other. In the sectional view of Fig. 1 one can see that the lamination stack 3 comprises channels 11, 12 which extend in axial direction through the lamination stack 3. The channels 11, 12 are part of a closed circuit in which a cooling fluid can circulate. In this embodiment oil is used as a cooling fluid. When the cooling fluid passes the lamination stack 3, it dissipates heat, so that the temperature of the electric motor 1, in particular the temperature of the lamination stack 3, can be kept within a predetermined limit during operation.

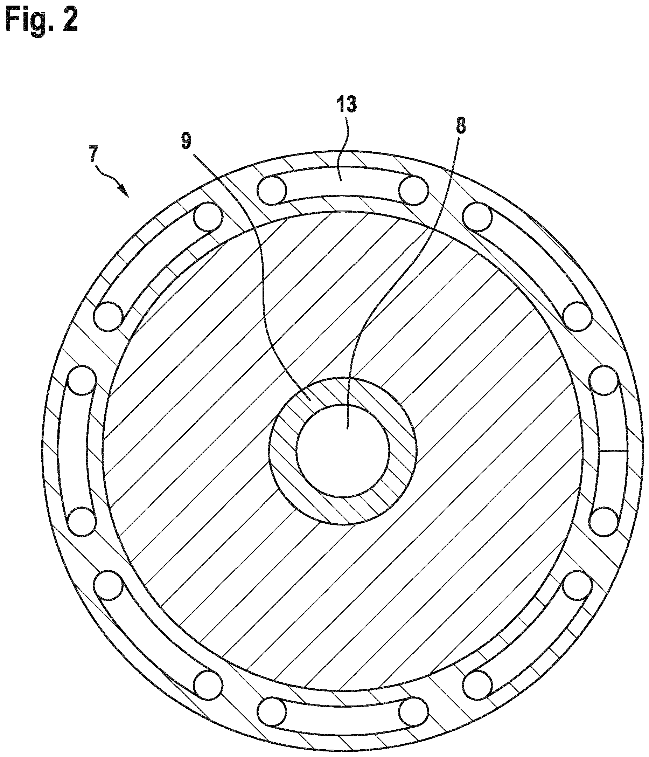

The stator 2 comprises several channels 11, 12 for cooling fluid which are arranged in parallel in circumferential direction. Fig. 2 is a sectional view of the endcap 7 along the line II-II of Fig. 1 and shows that the endcap 7 comprises eight channel links 13 which are arranged in circumferential direction. Each channel link 13 connects two adjacent channels 11, 12 with each other so that the cooling fluid can flow through an axial channel, a channel link and another axial channel. When the fluid passes a channel link 13, the flow direction is reversed. The stator 2 has one inlet and one outlet. As each channel link 13 connects one axial channel 11, 12 to an adjacent axial channel 11, 12, the fluid passes each adjacent channel 11, 12, before it leaves the stator 2.

The outer surface 14 of the stator 2 is exposed to the outside, as it is not supported in a housing. In order to improve the sealing property, the outer surface 14 is covered by a shrink wrap film 15. Power scaling of the electric motor 1 can simply be affected by adjusting the axial length of the stator 2, i.e. by increasing or decreasing the number of metal sheets. The axial length of the rotor 5 has of course to be adjusted accordingly.

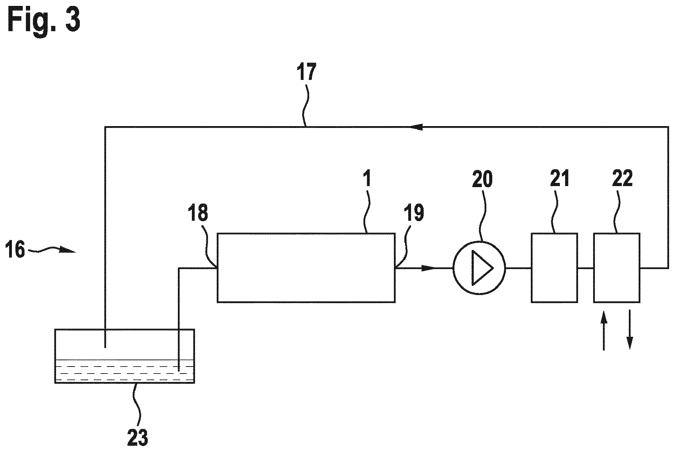

Fig. 3 shows an inventive arrangement 16 comprising the electric motor 1, pipes 17 for the cooling fluid which form a closed circuit and which are connected to an inlet 18 and an outlet 19 of the electric motor 1. The arrangement 16 further comprises a pump 20, a filter 21, a heat exchanger 22 and an oil sump 23. When the pump 20 is operated, the cooling fluid is conveyed through the filter 21, the heat exchanger 22, the oil sump 23 and the electric motor 1. It is important that the electric motor 1 is located in the suction path of the pump 20. In the suction path the pressure in the pipes 17 and the axial channels 11, 12 of the lamination stack 3 is always below the outside atmospheric pressure. Consequently, it is impossible that cooling fluid leaks through the lamination stack 3. Under this condition the shrink wrap film 15, which covers the outer surface 14 of the lamination stack 3, is sufficient to prevent any leaks of cooling fluid to the outside as it is never subjected to pressure from within.

### List of reference numbers

- 1: electric motor
- 2: stator
- 3: lamination stack
- 4: windings
- 5: rotor
- 6: rotor shaft
- 7: endcap
- 8: hole
- 9: bearing
- 10: endcap
- 11: channel
- 12: channel
- 13: channel link
- 14: surface
- 15: shrink wrap film
- 16: arrangement
- 17: pipe
- 18: inlet
- 19: outlet
- 20: pump
- 21: filter
- 22: heat exchanger
- 23: oil sump

## Claims

1. Arrangement (16), comprising an electric motor (1) with
- a stator (2) with a lamination stack (3) surrounded by windings (4) for generating a rotating electromagnetic field,
- a rotor (5) surrounded by the stator (3),
- a first endcap (7) arranged at one axial side of the electric motor (1),
- a second endcap (10) arranged at the opposite axial side of the electric motor (1),
- channels (11, 12) for a cooling fluid which extend in axial direction through the lamination stack (3),
- pipes (17) for the cooling fluid which form a closed circuit and which are connected to an inlet (18) and an outlet (19) of the electric motor (1),
- a pump (20) for conveying the cooling fluid,
**characterized in that** the electric motor (1) is located in the suction path of the pump (20).

2. Arrangement according to claim 1, wherein the closed circuit for the cooling fluid comprises a container or an oil sump (23).

3. Arrangement according to claim 1 or 2, wherein the lamination stack (3) of the stator (2) is exposed to the outside.

4. Arrangement according to any of the preceding claims, wherein the outer surface (14) of the lamination stack (3) is provided with a coating selected from the following group: paint, lacquering, powder coating.

5. Arrangement according to any of claims 1 to 3, wherein the outer surface (14) of the lamination stack (3) is provided with a plastic film.

6. Arrangement according to claim 5, wherein the plastic film is a shrink wrap film (15).

7. Arrangement according to any of the preceding claims, wherein the closed circuit for the cooling fluid comprises a filter (21) and/or a heat exchanger (22).

8. Arrangement according to any of the preceding claims, wherein the endcaps (7, 10) comprise circumferentially extending channel links (13) for connecting two axial channels (11, 12).
